(19) **Europäisches Patentamt / European Patent Office / Office européen des brevets**

(11) **EP 4 651 580 A1**

(12) **EUROPEAN PATENT APPLICATION**
published in accordance with Art. 153(4) EPC

(43) Date of publication:
**19.11.2025 Bulletin 2025/47**

(21) Application number: **24829834.1**

(22) Date of filing: **18.02.2024**

(51) International Patent Classification (IPC):
*H04W 52/02* (2009.01)    *H04W 72/12* (2023.01)

(52) Cooperative Patent Classification (CPC):
**H04W 52/02; H04W 72/12; H04W 72/121;
H04W 72/1263; H04W 72/542;** Y02D 30/70

(86) International application number:
**PCT/CN2024/077442**

(87) International publication number:
**WO 2025/001175 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 CN 202310802957**

(71) Applicant: **ZTE Corporation
Shenzhen, Guangdong 518057 (CN)**

(72) Inventors:
- **WANG, Xiaofeng**
  Shenzhen, Guangdong 518057 (CN)
- **HAN, Qian**
  Shenzhen, Guangdong 518057 (CN)

(74) Representative: **Savi, Massimiliano et al
Notarbartolo & Gervasi S.p.A.
Viale Achille Papa, 30
20149 Milano (IT)**

(54) **NETWORK SCHEDULING METHOD, NETWORK DEVICE, AND COMPUTER-READABLE STORAGE MEDIUM**

(57) The present application provides a network scheduling method, a network device, and a computer-readable storage medium. The network scheduling method comprises: acquiring current terminal feature information of a user terminal UE in a target network, and obtaining a predicted user service requirement on the basis of the current terminal feature information and a preset user portrait (S100); determining a base station energy consumption prediction set on the basis of a preset base station energy consumption portrait and the predicted user service requirement (S200); and performing energy-saving scheduling processing on a base station in the target network on the basis of the base station energy consumption prediction set (S300).

Obtain current terminal device characteristic information of a UE in a target network and derive a predicted user service demand based on the current terminal device characteristic information and a preset user profile — S100

Determine a base station energy consumption prediction set based on a preset base station energy consumption profile and the predicted user service demand — S200

Perform energy-saving scheduling on a base station in the target network based on the base station energy consumption prediction set — S300

FIG. 2

## Description

### CROSS-REFERENCE TO RELATED APPLICATIONS

The present disclosure claims priority to Chinese Patent Application No. 202310802957.7, filed on June 30, 2023, the entire contents of which are incorporated herein by reference.

### TECHNICAL FIELD

The embodiments of the present disclosure relate to, but are not limited to, the field of communication technologies, and particularly to a network scheduling method, a network device, and a computer-readable storage medium.

### BACKGROUND

With the continuous development of wireless network technologies, wireless network transmission rates continue to increase, transmission delays continue to decrease, and transmission bandwidths continue to expand. The types of services which can be carried are also diversifying. Consequently, user demands for service perception are rising. In some scenarios, to ensure a better user experience, the focus is solely on whether user perception requirements are met, network energy consumption issues are often neglected. This results in high energy consumption in existing networks, failing to achieve the goal of energy saving and emission reduction.

### SUMMARY

The following presents a summary of the subject matter described in detail herein. This summary is not intended to limit the scope of the appended claims.

The embodiments of the present disclosure provide a network scheduling method, a network device, and a computer-readable storage medium.

In a first aspect, an embodiment of the present disclosure provides a network scheduling method, which includes: obtaining current terminal device characteristic information of a user equipment (UE) in a target network, and obtaining a predicted user service demand based on the current terminal device characteristic information and a preset user profile; determining a base station energy consumption prediction set based on a preset base station energy consumption profile and the predicted user service demand; and performing energy-saving scheduling on a base station in the target network based on the base station energy consumption prediction set.

In a second aspect, an embodiment of the present disclosure further provides a network device, which includes: at least one processor; at least one memory for storing at least one program; where the network scheduling method as described above is implemented when the at least one program is executed by the at least one processor.

In a third aspect, an embodiment of the present disclosure further provides a computer-readable storage medium storing computer-executable instructions for executing the network scheduling method as described above.

### DESCRIPTION OF DRAWINGS

The drawings are used to provide a further understanding of the technical scheme of the present disclosure and constitute a part of the specification. Together with the embodiments of the present disclosure, the drawings serve to explain the technical scheme of the present disclosure and do not limit the technical scheme of the present disclosure.

FIG. 1 is a schematic diagram of a system architecture for executing a network method according to an embodiment of the present disclosure;
FIG. 2 is a flowchart of a network scheduling method according to an embodiment of the present disclosure;
FIG. 3 is a flowchart of determining a base station energy consumption prediction set according to an embodiment of the present disclosure;
FIG. 4 is a flowchart of constructing a user profile according to an embodiment of the present disclosure;
FIG. 5 is a schematic diagram of parameters of a user profile provided by an embodiment of the present disclosure;
FIG. 6 is a flowchart of constructing a network-level grid profile provided by an embodiment of the present disclosure;
FIG. 7 is a schematic diagram of parameters of a network-level grid profile provided by an embodiment of the present disclosure;
FIG. 8 is a flowchart of determining a cell-level grid provided by an embodiment of the present disclosure;
FIG. 9 is a flowchart of constructing an initial grid provided by an embodiment of the present disclosure;

FIG. 10 is a schematic diagram of constructing an initial grid provided by an embodiment of the present disclosure;

FIG. 11 is a schematic diagram of constructing an initial grid provided by another embodiment of the present disclosure;

FIG. 12 is a flowchart of determining a cell-level grid provided by an embodiment of the present disclosure;

FIG. 13 is a flowchart of constructing a cell-level grid profile provided by an embodiment of the present disclosure;

FIG. 14 is a schematic flowchart of constructing a cell-level grid provided by an embodiment of the present disclosure;

FIG. 15 is a flowchart of constructing a base station energy consumption profile according to an embodiment of the present disclosure;

FIG. 16 is a schematic diagram of parameters of a base station energy consumption profile according to an embodiment of the present disclosure;

FIG. 17 is a flowchart of determining a base station energy consumption prediction set according to an embodiment of the present disclosure;

FIG. 18 is a flowchart of constructing segmented base station energy consumption models according to an embodiment of the present disclosure;

FIG. 19 is a schematic diagram of base station energy consumption inference according to an embodiment of the present disclosure;

FIG. 20 is a schematic diagram of constructing a base station energy consumption model according to an embodiment of the present disclosure;

FIG. 21 is a flowchart of determining a set of campable cells according to an embodiment of the present disclosure;

FIG. 22 is a flowchart of performing segmented prediction on a set of campable cells according to an embodiment of the present disclosure;

FIG. 23 is a flowchart of performing energy-saving scheduling on base stations in a target network according to an embodiment of the present disclosure;

FIG. 24 is a scheduling schematic diagram of a network scheduling method according to an embodiment of the present disclosure;

FIG. 25 is a schematic structural diagram of a network device provided by an embodiment of the present disclosure.

## DETAILED DESCRIPTION

To make the objectives, technical scheme, and advantages of the present disclosure clear, the following further describes the present disclosure in detail with reference to the accompanying drawings and embodiments. It should be understood that the embodiments described herein are only used to explain the present disclosure and are not intended to limit the present disclosure.

It should be noted that although functional module divisions are shown in the device schematic diagrams and logical sequences are illustrated in the flowcharts, in some cases, the steps shown or described may be executed in an order different from the module divisions in the devices or the sequences in the flowcharts. The terms "first," "second," etc., in the specification, claims, and the above-mentioned drawings are used to distinguish similar objects and are not necessarily used to describe a specific order or sequence.

The present disclosure provides a network scheduling method, a network device, and a computer-readable storage medium. The method involves obtaining current terminal device characteristic information of UEs in a target network and determining predicted user service demand based on the current terminal device characteristic information and a preset user profile. Then, a base station energy consumption prediction set is determined based on a preset base station energy consumption profile and the predicted user service demand. Finally, energy-saving scheduling is performed on base stations in the target network based on the base station energy consumption prediction set. According to the technical scheme provided by the embodiments of the present disclosure, user perception and base station energy consumption are coordinated to reduce base station energy consumption while ensuring user perception, thereby achieving the goal of energy saving and emission reduction.

The following further elaborates on the embodiments of the present disclosure with reference to the accompanying drawings.

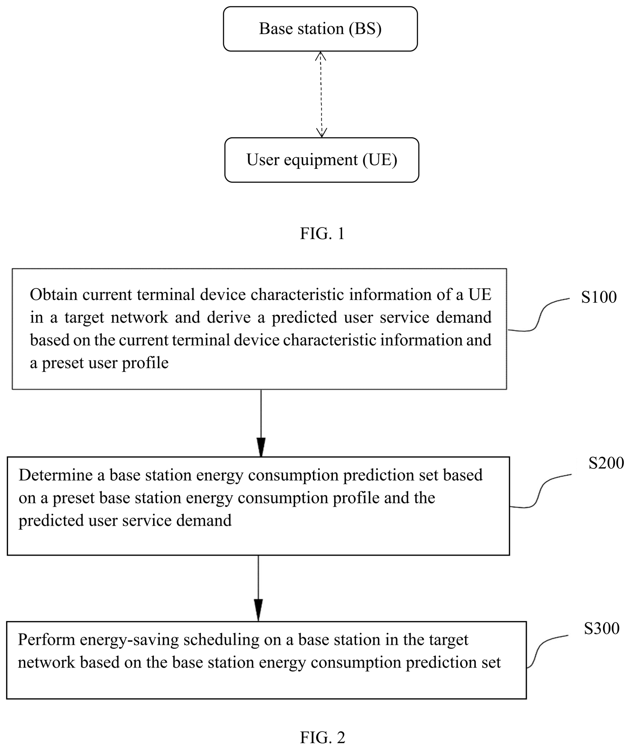

FIG. 1 is a schematic diagram of a system architecture for executing a network scheduling method provided by an embodiment of the present disclosure. In FIG. 1, the apparatus includes at least one base station (BS) and at least one user terminal (UE), which can establish data connections via wireless links. A single base station can serve multiple UEs, enabling communication and access to related services through the same base station.

In some embodiments of the present disclosure, the UE may be a mobile phone, tablet, IoT device, etc. All such devices can connect to the base station wirelessly.

The system architecture and application scenarios described in the embodiments of the present disclosure are intended to clarify the technical scheme of the embodiments and do not limit the scope of the technical scheme provided. Those having ordinary skills in the art will recognize that as system architectures evolve and new application scenarios emerge, the technical scheme provided in the embodiments remains applicable to similar technical problems.

It should be understood by those having ordinary skills in the art that the system architecture shown in FIG. 1 does not limit the embodiments of the present disclosure. The architecture may include more or fewer components than illustrated, combine certain components, or arrange components differently.

Based on the above system architecture, various embodiments of the scheduling method in the present disclosure are proposed.

FIG. 2 is a flowchart of a network scheduling method provided by an embodiment of the present disclosure. The method includes, but is not limited to, steps S100, S200, and S300.

Step S100: obtaining current terminal device characteristic information of a UE in a target network and deriving a predicted user service demand based on the current terminal device characteristic information and a preset user profile.

Step S200: determining a base station energy consumption prediction set based on a preset base station energy consumption profile and the predicted user service demand.

Step S300: performing energy-saving scheduling on a base station in the target network based on the base station energy consumption prediction set.

In the embodiments of the present disclosure, the current terminal device characteristic information of the UE in the target network is obtained, and the predicted user service demand is determined based on the current terminal device characteristic information and a preset user profile. Then, the base station energy consumption prediction set is determined based on the preset base station energy consumption profile and the predicted user service demand. Finally, energy-saving scheduling is performed on the base station in the target network based on the base station energy consumption prediction set. According to the technical scheme provided by the embodiments of the present disclosure, user perception and base station energy consumption are coordinated to reduce base station energy consumption while ensuring user perception, thereby achieving the goal of energy saving and emission reduction.

It is worth noting that the target network can be a network requiring scheduling, which may consist of multiple base stations. Each base station may include multiple cells, and each cell may serve multiple UEs. The current terminal device characteristic information of the UE in the target network is collected, where the current terminal device characteristic information can be understood as real-time terminal status information of the UE. The terminal status information may include real-time user attribute information, real-time user service attribute information, and real-time user behavior attribute information.

It can be understood that the user profile can be a database model obtained through deep learning based on historical terminal device characteristic information. This model has inference and prediction capabilities, so the obtained current terminal device characteristic information can be matched and reasoned with the user profile to obtain a prediction result of user service demand, which is the predicted user service demand in the embodiments of the present disclosure. In some embodiments, the obtained current terminal device characteristic information includes movement speed information. Then, by combining the user's movement speed information with the user profile, the cell location information of the UE at the next moment can be predicted. Alternatively, during fixed time intervals each day, a UE may engage in video playback. Therefore, based on the user profile and the collected current terminal device characteristic information, it can be inferred that the user needs to perform a video playback, requiring a high-bandwidth service demand.

It can be understood that the base station energy consumption profile can be a database model obtained through deep learning based on historical base station energy consumption data. This model also has inference and prediction capabilities. The base station energy consumption prediction set can be determined based on the base station energy consumption profile and the predicted user service demand. Finally, energy-saving scheduling can be implemented for the base station in the target network based on the base station energy consumption prediction set. In the process of implementing energy-saving scheduling for the base station in the target network, it ensures that all UEs in the target network meet their respective service demands while minimizing the energy consumption of each base station in the target network, thereby achieving the goal of energy saving and emission reduction.

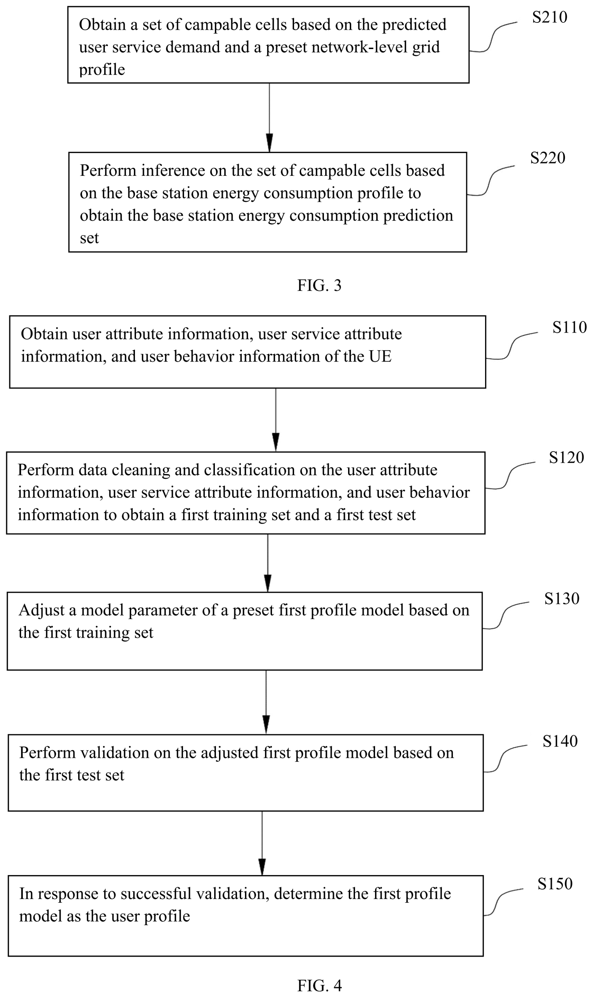

As shown in FIG. 3, the above step S200 may include, but is not limited to, steps S210 and S220.

Step S210: obtaining a set of campable cells based on the predicted user service demand and a preset network-level grid profile.

Step S220: performing inference on the set of campable cells based on the base station energy consumption profile to obtain the base station energy consumption prediction set.

In the embodiments of the present disclosure, in the process of determining the base station energy consumption prediction set, the set of campable cells is first obtained based on the predicted user service demand and the preset network-level grid profile. Then, by combining the traffic prediction of the set of campable cells with the base station energy consumption profile, energy consumption inference is performed on the set of campable cells to obtain the base station energy consumption prediction set for the base station where the campable cells are located.

It is understandable that the network-level grid profile can be a database model obtained through deep learning based on historical network-level grid data, which possesses inference and prediction capabilities. The set of campable cells can be a collection of candidate cells where the UE may camp while meeting service demands. By performing inference on the set of campable cells based on the base station energy consumption profile, the base station energy consumption prediction set can be obtained. Here, the base station energy consumption prediction set is derived by conducting base station energy consumption prediction separately for each campable cell in the set of campable cells in case that the service demands of the UE is met, resulting in multiple items of base station energy consumption prediction information. These multiple items of prediction information can be combined to form the base station energy consumption prediction set.

As shown in FIG. 4, the user profile can be obtained through, but not limited to, steps S110, S120, S130, S140, and S150.

Step S110: obtaining user attribute information, user service attribute information, and user behavior information of the UE.

Step S120: performing data cleaning and classification on the user attribute information, user service attribute information, and user behavior information to obtain a first training set and a first test set.

Step S130: adjusting a model parameter of a preset first profile model based on the first training set.

Step S140: performing validation on the adjusted first profile model based on the first test set.

Step S150: in response to successful validation, determining the first profile model as the user profile.

In the embodiments of the present disclosure, during the process of constructing the user profile, the user attribute information, user service attribute information, and user behavior information of the UE are first obtained. Then, data cleaning and classification are performed on this information to obtain the first training set and the first test set. Next, the model parameter(s) of the preset first profile model is/are adjusted based on the first training set, followed by validation of the adjusted first profile model using the first test set. If the validation passes, the first profile model is determined as the user profile.

It is worth noting that by mining and performing deep learning on the user attribute information, user service attribute information, and user behavior information of the UE, the user profile can be constructed to manage the characteristics of the UE, facilitating refined management of the UE.

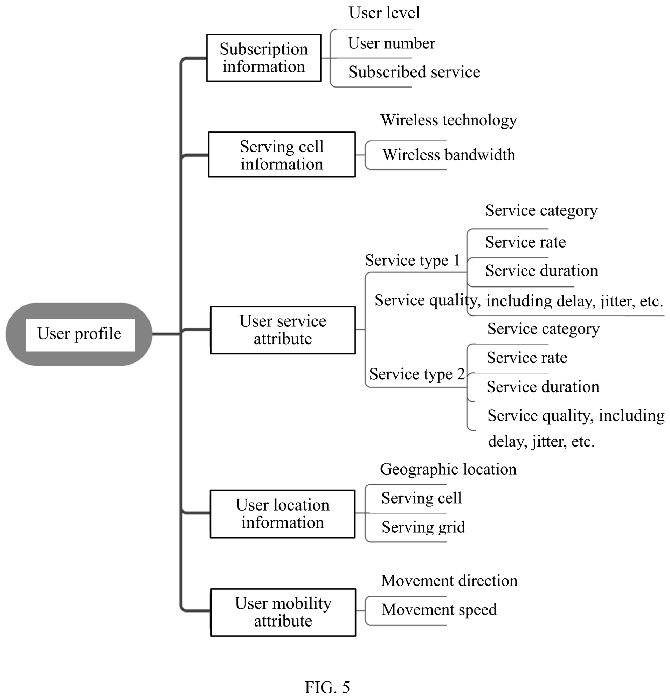

In some embodiments, as shown in FIG. 5, the user profile may include, but is not limited to, subscription information, serving cell information, a user service attribute, user location information, and a user mobility attribute. Here, the subscription information may include a user level, a user number, and a subscribed service; the serving cell information may include a wireless standard and a wireless bandwidth; the user service attribute may include a service type, a service rate, a service duration, and a service quality; the user location information may include a geographic location, a serving cell, and a serving grid; and the user mobility attributes may include a movement direction and a movement speed.

In some embodiments, during the construction of a user profile, data accumulation and learning are performed on the user attribute, service attribute, and behavior attribute. The entire process can be outlined as follows: First, Data Collection is conducted, primarily involving the collection and preliminary preprocessing of defined data. Next, data organization is performed, mainly including the removal of abnormal data and extremely low-probability data. Subsequently, a clustering is carried out to calculate a converged central position dataset $\hat{U}$. The valid profile data set U within this grid satisfies the probability distribution where the distance to the central position dataset $\hat{U}$ is $(\mu_U, \sigma_U)$. Here, $\hat{U}$ refers to the "centroid" of the dataset, and $(\mu_U, \sigma_U)$ represents the mean and variance of the distance from each data point to this centroid, respectively. The distance here can be calculated using the second-order moment. Following this, baseline data validation is performed by conducting error analysis between $\hat{U}$ and subsequently collected profile data $U$. If the result satisfies $P(U|\mu_U,\sigma_U) \geq \eta_U$ (where $\eta_U$ is a predefined probability threshold), the baseline profile data is successfully constructed. The user profile data also requires periodic updates to account for changes in user behavior and network conditions.

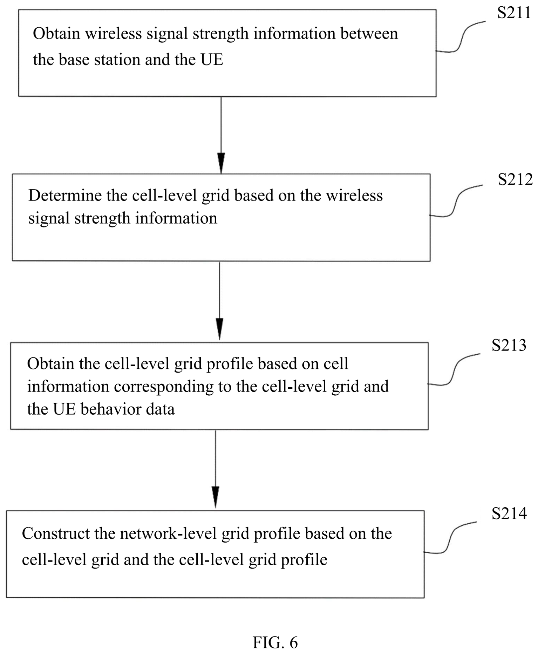

As shown in FIG. 6, the network-level grid profile can be obtained through, but not limited to, steps S211, S212, S213, and S214.

Step S211: obtaining wireless signal strength information between the base station and the UE.

Step S212: determining the cell-level grid based on the wireless signal strength information.

Step S213: obtaining the cell-level grid profile based on cell information corresponding to the cell-level grid and the UE behavior data.

Step S214: constructing the network-level grid profile based on the cell-level grid and the cell-level grid profile.

In the embodiments of the present disclosure, during the construction of the network-level grid profile, wireless signal strength information between the base station and the UE is first obtained. Next, the cell-level grid is determined based on the wireless signal strength information. Then, the cell-level grid profile is determined based on the cell information corresponding to the cell-level grid and the UE's behavior data. Finally, the network-level grid profile is constructed using the cell-level grid and the cell-level grid profile.

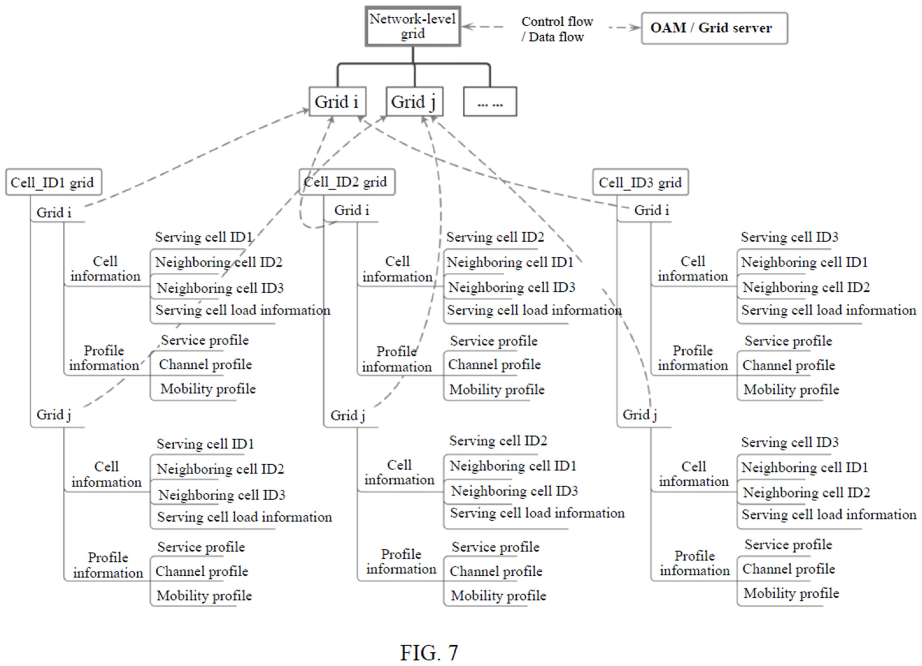

In some embodiments, as shown in FIG. 7, the network-level grid profile may include, but is not limited to, cell information and profile information. The cell information may include a serving cell, intra-frequency neighboring cells, inter-frequency neighboring cells, and serving cell load information. The profile information may include a service profile, a channel profile, and a mobility profile. The service profile includes service delay and service rate, the channel profile includes spectral efficiency and channel quality, and the mobility profile includes target cell handover success rate.

It is worth noting that the network-level grid profile divides the target network into grids, with each grid treated as an independent unit for wireless resource scheduling and user management, enabling refined control over network resources and users. Data mining, data maintenance, grid construction, and grid updating for network-level grid profile can be deployed on an open application model or on a dedicated server. Considering the hardware capabilities of the base station and the required computing resources, the maintenance and computation of the grid and profile data involved in the embodiments of the present disclosure can be deployed on the base station, the open application model, or a standalone server.

It is worth noting that the wireless signal strength information between the base station and UE can be the wireless signal strength information reported by the UE.

Based on the cell-level grids, cell-level grid profiles, and cell coverage relationships within the target network area, a network-level grid profile is constructed; the network-level grid and network-level grid profile also require periodic updates to avoid deviations in grids and grid profiles caused by network changes.

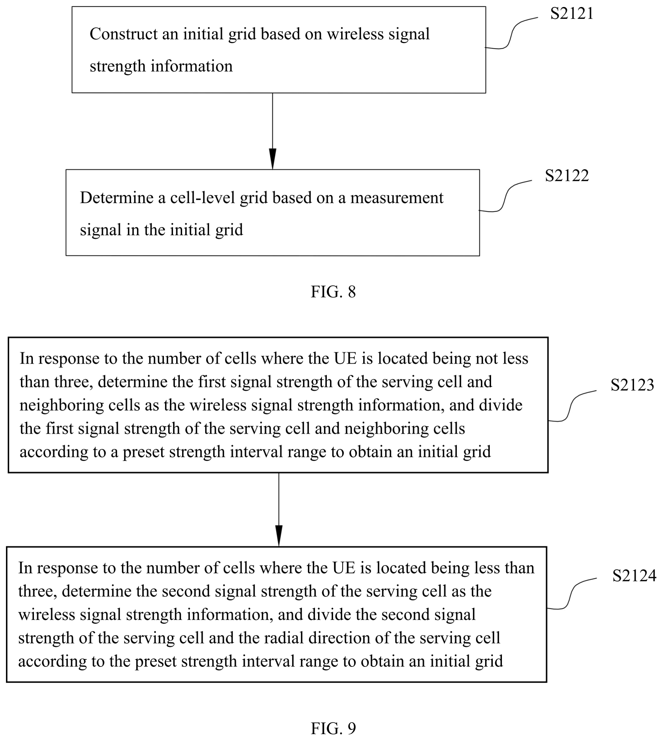

As shown in FIG. 8, the above step S212 may include, but is not limited to, steps S2121 and S2122.

Step S2121: constructing an initial grid based on wireless signal strength information;

Step S2122: determining a cell-level grid based on a measurement signal in the initial grid.

In the embodiments of the present disclosure, during the process of constructing a cell-level grid, an initial grid is first constructed based on wireless signal strength information, and then the cell-level grid is determined based on a measurement signal in the initial grid.

It is worth noting that the measurement signal can be obtained through, but not limited to, a UE measurement of a downlink broadcast from the base station or a base station measurement of an uplink signal from the UE.

As shown in FIG. 9, the above step S2121 may include, but is not limited to, steps S2123 and S2124.

Step S2123: when the number of cells where the UE is located is not less than three, the wireless signal strength information is the first signal strength of the serving cell and neighboring cells, and the first signal strength of the serving cell and neighboring cells is divided according to a preset strength interval range to obtain an initial grid.

Step S2124: when the number of cells where the UE is located is less than three, the wireless signal strength information is the second signal strength of the serving cell, and the second signal strength of the serving cell and the radial direction of the serving cell are divided according to the preset strength interval range to obtain an initial grid.

In the embodiment of the present disclosure, when the number of cells where the UE is located is not less than three, the wireless signal strength information is the first signal strength of the serving cell and neighboring cells, and then the first signal strength of the serving cell and neighboring cells is divided according to a preset strength interval range to obtain an initial grid; when the number of cells where the UE is located is less than three, the wireless signal strength information is the second signal strength of the serving cell, and then the second signal strength of the serving cell and the radial direction of the serving cell are divided according to the preset strength interval range to obtain an initial grid.

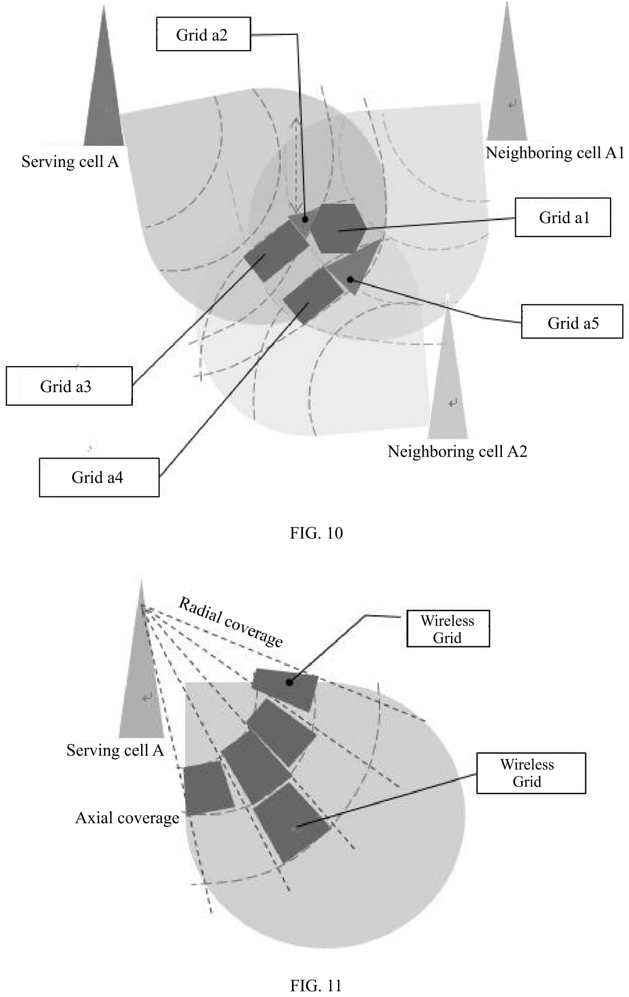

In some embodiments, as shown in FIG. 10, the wireless signal coverage area of the serving cell A, neighboring cell A1, and neighboring cell A2 are divided into continuous intervals in the direction of decreasing signal strength with a step size of $\Delta$ dB; the signal intervals of the serving cell A, neighboring cell A1, and neighboring cell A2 with a step size of $\Delta$ dB can form multiple polygonal grids, each of which is called an initial grid. As shown in FIG. 11, the wireless signal coverage area of the serving cell A is also divided into continuous intervals in the direction of decreasing signal strength with a step size of $\Delta$ dB; at the same time, the coverage area of serving cell A is divided into multiple sector areas along the radial direction; the axial intervals and radial intervals of serving cell A also form multiple initial grids. For FIG. 10, assuming that the cell ID of the serving cell A is 101, the cell ID of the neighboring cell A1 is 201, and the cell ID of the neighboring cell A2 is 301, after the initial grid is constructed, the cell IDs of the serving cell and neighboring cells corresponding to different initial grids can be shown in the following table.

| Grid ID | Serving Cell ID | Neighboring Cell 1 | Neighboring Cell 2 |
| --- | --- | --- | --- |
| a1 | 201 | 301 | 101 |
| a2 | 101 | 201 | 301 |
| a3 | 101 | 201 | 301 |
| a4 | 301 | 101 | 201 |
| a5 | 201 | 101 | 301 |

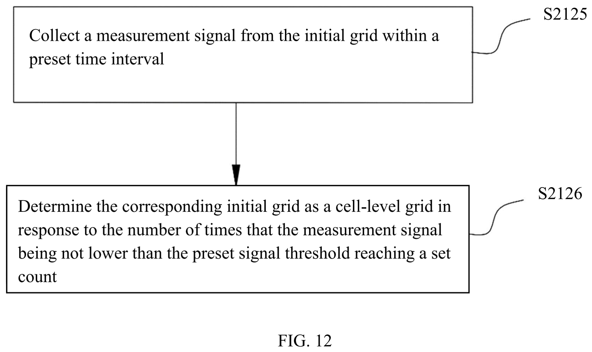

As shown in FIG. 12, the above step S2122 may include, but is not limited to, steps S2125 and S2126.

Step S2125: collecting a measurement signal from the initial grid within a preset time interval.

Step S2126: determining the corresponding initial grid as a cell-level grid in response to the number of times that the measurement signal being not lower than the preset signal threshold reaches a set count.

In the embodiments of the present disclosure, after constructing the initial grid, during the subsequent process of determining the construction of the cell-level grid, the measurement signal from the initial grid can be collected within a preset time interval. If the number of times the measurement signal is not lower than the preset signal threshold reaches the set count, the corresponding initial grid will be determined as the cell-level grid.

In some embodiments, the measurement signal may be a reference signal received power signal covered by the base station. Measurement signals are continuously collected for N days (N ≥ 14), and only when the number of valid measurement results collected (signal strength not lower than the signal threshold) is not less than the preset count will the corresponding initial grid be determined as the cell-level grid. The determination of the signal threshold and the preset count can be obtained through experimental verification or based on empirical or theoretical analysis.

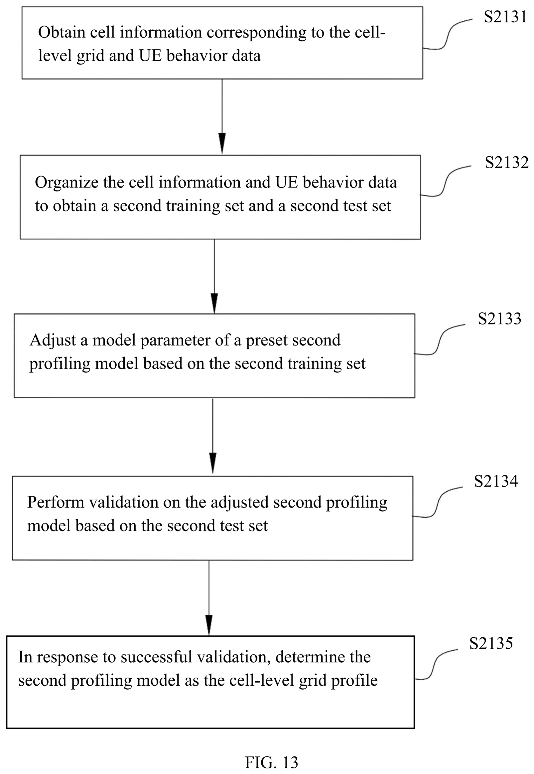

As shown in FIG. 13, the aforementioned Step S213 may include, but is not limited to, Step S2131, Step S2132, Step S2133, Step S2134, and Step S2135.

Step S2131: obtaining cell information corresponding to the cell-level grid and UE behavior data.

Step S2132: organizing the cell information and UE behavior data to obtain a second training set and a second test set.

Step S2133: adjusting a model parameter of a preset second profiling model based on the second training set.

Step S2134: performing validation on the adjusted second profiling model based on the second test set.

Step S2135: in response to successful validation, determining the second profiling model as the cell-level grid profile.

In the embodiments of the present disclosure, during the process of constructing the cell-level grid profile: firstly, the cell information corresponding to the cell-level grid and the UE behavior data is obtained; then the cell information and UE behavior data is organized to obtain the second training set and the second test set; next, a model parameter of a preset second profiling model is adjusted based on the second training set; then validation is performed on the adjusted second profiling model based on the second test set; if the validation passes, the second profiling model is determined as the cell-level grid profile.

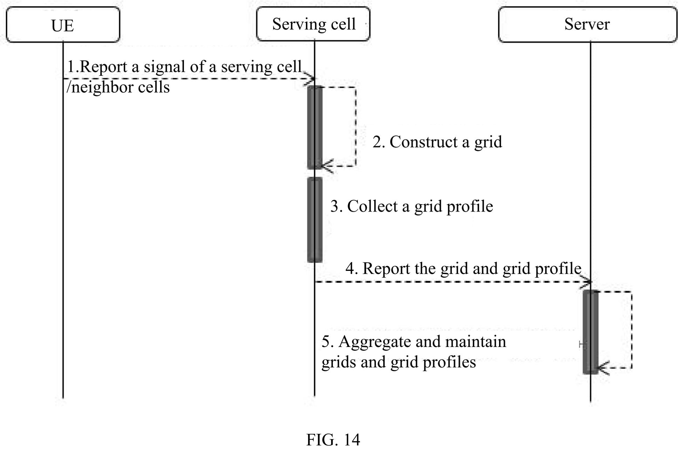

In some embodiments, as shown in FIG. 14, during the process of constructing the cell-level grid profile: firstly, the cell information corresponding to each cell-level grid and the UE behavior data is collected; then filtering data, cleaning data, and removing abnormal data before performing clustering to calculate the converged central position dataset $\hat{D}$. The valid profile data set $D$ within this grid satisfies the probability distribution where the distance to the central position dataset

$\hat{D}$ is $(\mu_D, \sigma_D)$, i.e., it satisfies the distribution with the probability density function $P\big(D\big|\mu_D, \sigma_D\big) = \dfrac{1}{\sigma_D \sqrt{2\pi}} e^{-\frac{(D-\mu_D)^2}{2\sigma_D^2}}$.

During the baseline data validation: deviation analysis is performed between $\hat{D}$ and subsequently collected profile data $D$. If $P(D|u_D, \sigma_D) \geq \eta_D$ is satisfied (where $\eta_D$ is a predefined probability threshold), the baseline profile data construction is successful. Here, $\hat{D}$ refers to the "centroid" of the dataset, and $(\mu_D, \sigma_D)$ represents the mean and variance of the distance from each group of data to this centroid, respectively. After the above steps, multiple grids are established under each cell, and the grid profile data construction is completed for each grid. The cell-level grid data and grid profile data of each cell are uploaded to the grid/profile server. The cell-level grid and grid profile data need to be updated periodically to avoid deviations caused by network changes. An update on the grid and grid profile data is performed during each update window.

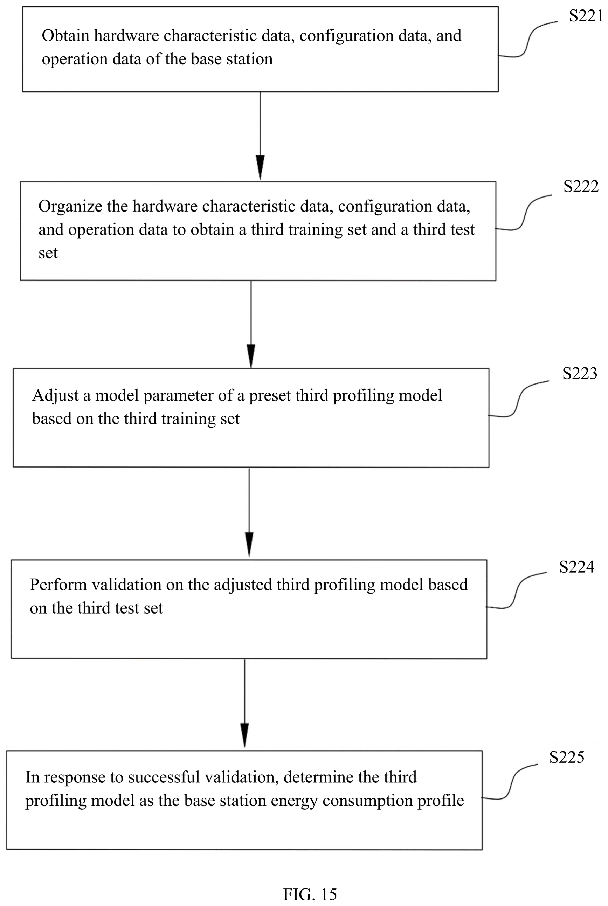

As shown in FIG. 15, the base station energy consumption profile can be obtained through, but not limited to, Step S221, Step S222, Step S223, Step S224, and Step S225.

Step S221: obtaining hardware characteristic data, configuration data, and operation data of the base station.

Step S222: organizing the hardware characteristic data, configuration data, and operation data to obtain a third training set and a third test set.

Step S223: adjusting a model parameter of a preset third profiling model based on the third training set.

Step S224: performing validation on the adjusted third profiling model based on the third test set.

Step S225: in response to successful validation, determining the third profiling model as the base station energy consumption profile.

In the embodiments of the present disclosure, during the process of constructing the base station energy consumption profile, hardware characteristic data, configuration data, and operation data of the base station can first be obtained; then, the hardware characteristic data, configuration data, and operation data are organized to obtain a third training set and a third test set; next, a model parameter of a preset third profiling model is adjusted based on the third training set; then, validation is performed on the adjusted third profiling model based on the third test set; finally, if the validation passes, the third profiling model is determined as the base station energy consumption profile.

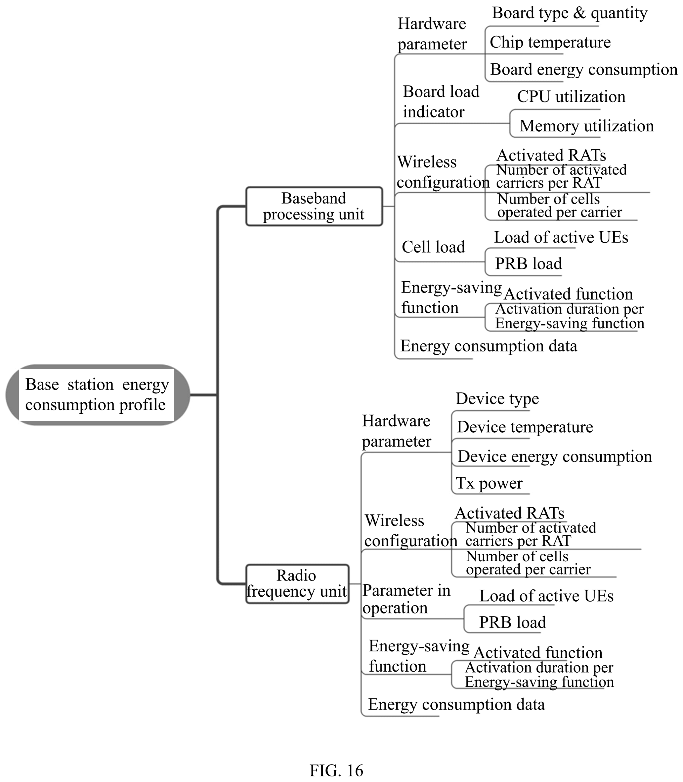

In some embodiments, as shown in FIG. 16, the base station energy consumption profile may include a parameter of a baseband processing unit and a parameter of a radio frequency unit; where the parameter of each of the baseband processing unit and the radio frequency unit may include a hardware parameter, wireless configuration, energy-saving function, and energy consumption data; the parameter of the baseband processing unit may also include a board load indicator and a cell load.

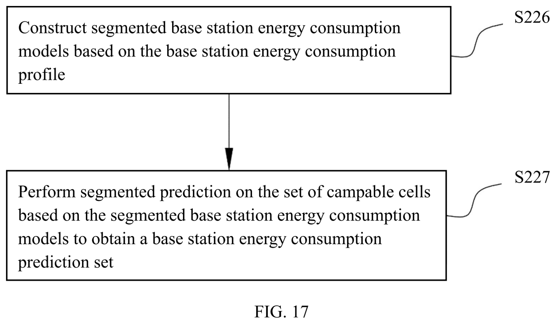

As shown in FIG. 17, the above step S220 may include, but is not limited to, steps S226 and S227.

Step S226: constructing segmented base station energy consumption models based on the base station energy consumption profile.

Step S227: performing segmented prediction on the set of campable cells based on the segmented base station energy consumption models to obtain a base station energy consumption prediction set.

In the embodiments of the present disclosure, after obtaining the base station energy consumption profile, it is also necessary to construct a base station energy consumption model based on the base station energy consumption profile. Subsequently, by performing segmented prediction on the set of campable cells based on the segmented base station energy consumption models, the base station energy consumption prediction set can be obtained.

It is worth noting that the characteristic parameter, configuration parameter, and runtime parameter of the base station (including the baseband processing unit and the radio frequency unit) are collected. Data mining and deep learning techniques are applied to analyze and process the collected dataset, thereby constructing the base station energy consumption profile dataset. Compared to the construction of a user profile, the base station energy consumption profile is more complex. Therefore, relying solely on the profile dataset cannot meet the prediction requirements for base station power consumption. The primary reason is that the power consumption of the power amplifier in the radio frequency unit accounts for 40%-65% of the total power consumption of the radio frequency unit. Under different service load conditions, the operating region of the power amplifier varies, and the efficiency of the power amplifier also differs (power amplifier efficiency = power amplifier output power / power amplifier input power). To ensure the output power of the power amplifier, it is necessary to adjust the input power of the power amplifier. Different interference environments and user distributions affect the spatial multiplexing capability and scheduling performance of the base station, which in turn influences the service load on the air interface and consequently the energy consumption of both the radio frequency unit and the baseband processing unit. Different service loads also impact the energy-saving features adopted by the baseband processing unit and the radio frequency processing unit, which further affects the overall energy consumption of the base station.

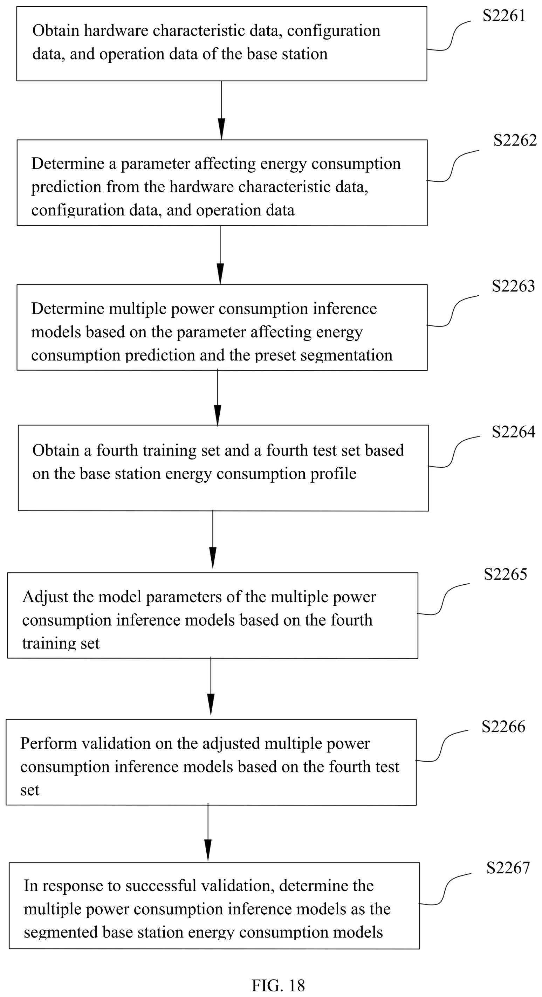

As shown in FIG. 18, the aforementioned step S226 may include, but is not limited to, steps S2261, S2262, S2263, S2264, S2265, S2266, and S2267.

Step S2261: obtaining hardware characteristic data, configuration data, and operation data of the base station.

Step S2262: determining a parameter affecting energy consumption prediction from the hardware characteristic data, configuration data, and operation data.

Step S2263: determining multiple power consumption inference models based on the parameter affecting energy consumption prediction and the preset segmentation range.

Step S2264: obtaining a fourth training set and a fourth test set based on the base station energy consumption profile.

Step S2265: adjusting the model parameters of the multiple power consumption inference models based on the fourth training set.

Step S2266: performing validation on the adjusted multiple power consumption inference models based on the fourth test set.

Step S2267: in response to successful validation, determining the multiple power consumption inference models as the segmented base station energy consumption models.

In the embodiments of the present disclosure, during the process of constructing the segmented base station energy consumption models based on the base station energy consumption profile, first, the hardware characteristic data, configuration data, and operation data of the base station are obtained. Then, a parameter affecting energy consumption prediction is determined from the hardware characteristic data, configuration data, and operation data. Next, multiple power consumption inference models are determined based on the parameter affecting energy consumption prediction and the preset segmentation range. Subsequently, a fourth training set and a fourth test set are obtained based on the base station energy consumption profile. The model parameters of the multiple power consumption inference models are adjusted based on the fourth training set. Then, validation is performed on the adjusted multiple power consumption inference models based on the fourth test set. If the validation passes, the multiple power consumption inference models are determined as the segmented base station energy consumption models.

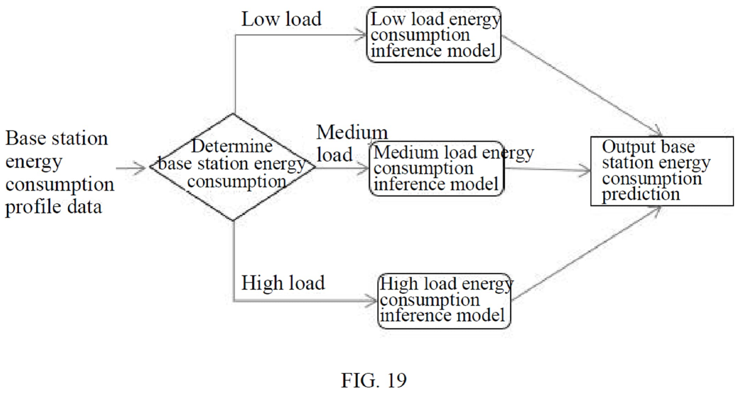

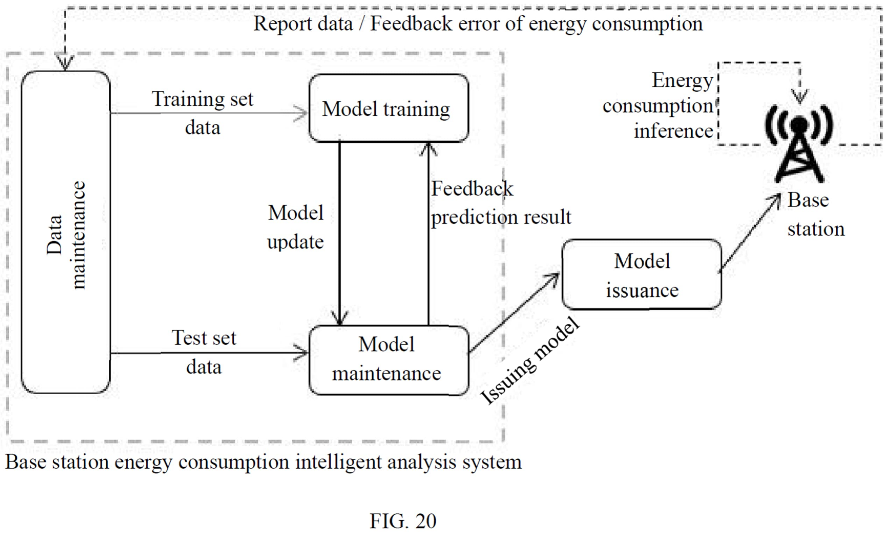

In some embodiments, as shown in FIG. 19, the factors with the greatest impact on base station energy consumption (such as downlink PRB occupancy rate, downlink spatial multiplexing layers, downlink modulation and coding scheme, etc.) are selected. Through laboratory/commercial field testing and analysis, these factors or combinations of these factors are determined, and their impact on base station energy consumption is assessed under different value ranges. Based on the characteristics of the base station's hardware, the segmentation range is reasonably delineated, and a segmentation judgment condition is determined. In an embodiment provided by the present disclosure, segmentation is performed based on load, which is divided into high load, medium load, and low load segments for energy consumption inference. As shown in FIG. 20, during the process of constructing the segmented base station energy consumption models, the present disclosure provides an embodiment where sufficient base station energy consumption profile data is collected within different energy consumption inference segmentation ranges, and energy consumption models for different load segments are constructed based on machine learning. This process can be functionally divided into four sub-functions: "data maintenance, model training, model maintenance, and model distribution." The Data maintenance module primarily supports data collection, data maintenance, providing training set/test set data, obtaining and maintaining base station data reporting and energy consumption prediction feedback, providing training set data to the model training module, and providing test set data to the model maintenance module. The model training module mainly uses neural network algorithms to perform deep learning based on the training set data, sends the generated energy consumption model to the model maintenance module, receives error result feedback from the model maintenance module based on test set data predictions, and optimizes the neural network algorithm based on the error result feedback from the model maintenance module. The model maintenance module receives model updates from the model training module, performs base station energy consumption inference using the base station energy consumption model based on test set data, and feeds the inference errors back to the model training module, while distributing the determined energy consumption inference model to the model distribution module. The model distribution module receives the energy consumption model from the model determination module and distributes the energy consumption model to the base station equipment. During subsequent operation, the base station equipment inputs a set of energy consumption profile parameters to be predicted into corresponding energy consumption inference paths for different loads, and derives the predicted base station energy consumption under corresponding conditions through the inference of the corresponding energy consumption model.

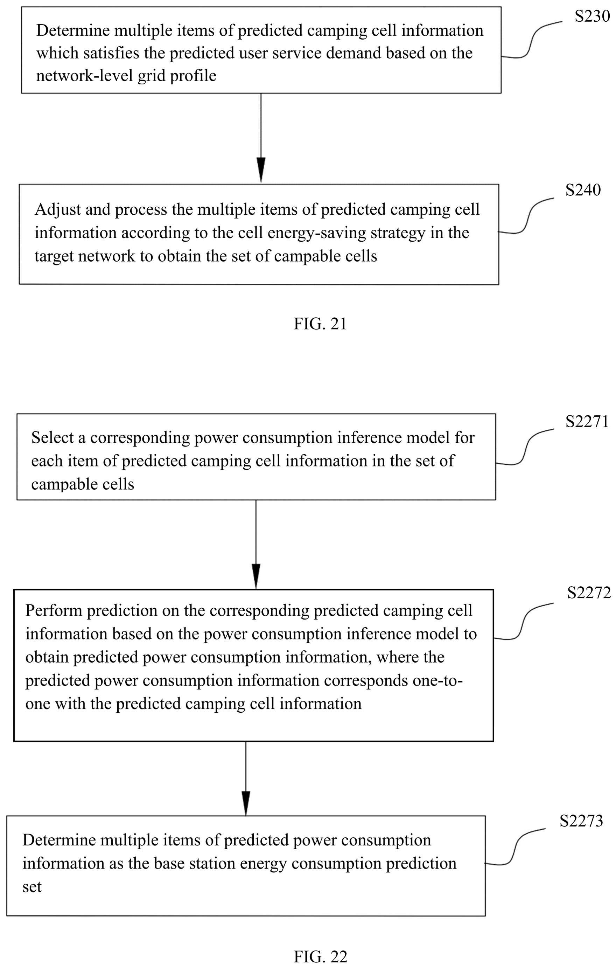

As shown in FIG. 21, the above step S210 may include, but is not limited to, steps S230 and S240.

Step S230: determining multiple items of predicted camping cell information which satisfies the predicted user service demand based on the network-level grid profile.

Step S240: adjusting and processing the multiple items of predicted camping cell information according to the cell energy-saving strategy in the target network to obtain the set of campable cells.

In the embodiments of the present disclosure, during the process of determining the set of campable cells, multiple items of predicted camping cell information which satisfies the predicted user service demand is first determined based on the network-level grid profile. Then, by adjusting and processing the multiple items of predicted camping cell information according to the cell energy-saving strategy in the target network, the set of campable cells can be obtained.

It is worth noting that some cells in the target network may also be configured with energy-saving strategies, which could render them unable to provide services at the next moment. Therefore, further screening of the multiple items of predicted camping cell information which satisfies the predicted user service demand is necessary to obtain the set of campable cells.

As shown in FIG. 22, the aforementioned step S227 may include, but is not limited to, steps S2271, S2272, and S2273.

Step S2271: selecting a corresponding power consumption inference model for each item of predicted camping cell information in the set of campable cells.

Step S2272: performing prediction on the corresponding predicted camping cell information based on the power consumption inference model to obtain predicted power consumption information, where the predicted power consumption information corresponds one-to-one with the predicted camping cell information.

Step S2273: determining multiple items of predicted power consumption information as the base station energy consumption prediction set.

In the embodiments of the present disclosure, during the process of calculating the base station energy consumption prediction set, the corresponding power consumption inference model is first selected for each item of predicted camping cell information in the set of campable cells, laying the groundwork for segmented energy consumption prediction. Subsequently, by applying the selected power consumption inference model to the corresponding predicted camping cell information, predicted power consumption information can be obtained. Finally, the multiple items of predicted power consumption information obtained are determined as the base station energy consumption prediction set.

It is worth noting that during the process of selecting the corresponding power consumption inference model for each item of predicted camping cell information in the set of campable cells, each item of predicted camping cell information corresponds to a specific power consumption inference model. For example, if the predicted camping cell information corresponds to a high-load scenario, a high-load power consumption inference model will subsequently be used for power consumption prediction processing.

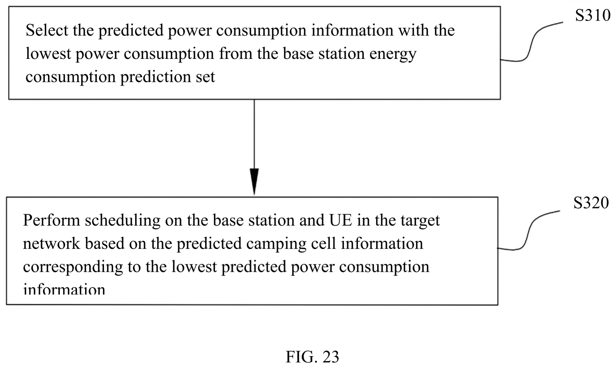

As shown in FIG. 23, the above step S300 may include, but is not limited to, steps S310 and S320.

Step S310: selecting the predicted power consumption information with the lowest power consumption from the base station energy consumption prediction set.

Step S320: performing scheduling on the base station and UE in the target network based on the predicted camping cell information corresponding to the lowest predicted power consumption information.

In the embodiments of the present disclosure, during the process of performing energy-saving scheduling on the base station in the target network, the predicted power consumption information with the lowest power consumption is first selected from the base station energy consumption prediction set. Then, scheduling is performed on the base station and UE in the target network based on the predicted camping cell information corresponding to the lowest predicted power consumption information.

It is worth noting that during the process of performing energy-saving scheduling on the base station in the target network, the essence is to achieve scheduling of the UE and wireless resource in the target network, ensuring that the UE camps in a suitable cell, meeting the service demands of the UE, and keeping the energy consumption of the base station in the target network at the lowest possible state.

To more clearly illustrate the scheduling of the network scheduling method provided by the embodiments of the present disclosure, an example is given below.

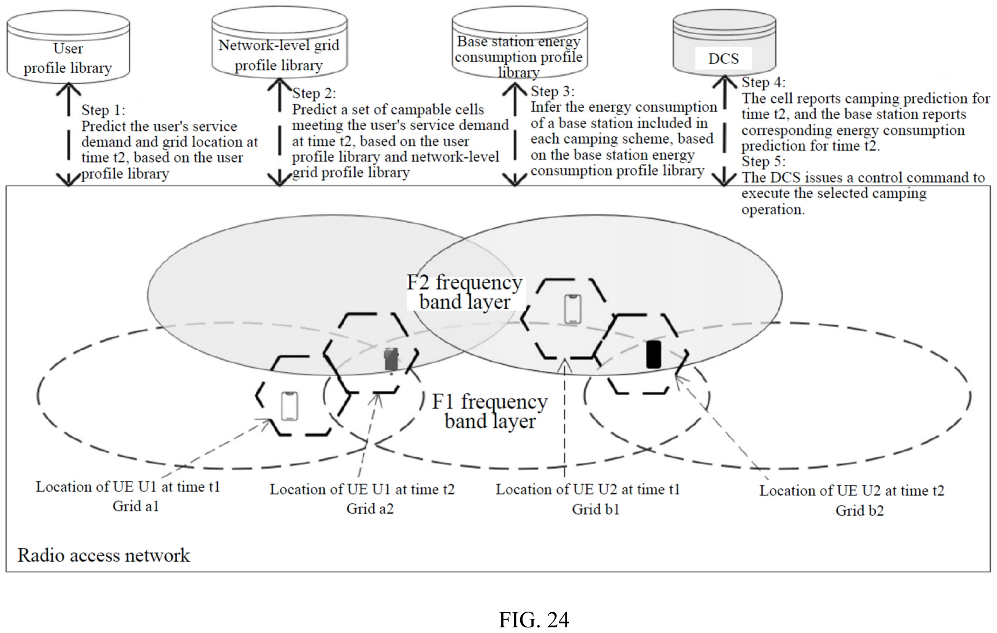

As shown in FIG. 24, base stations A1-A3 have activated an F1 frequency band, and base stations B1-B2 have activated an F2 frequency band. At time t1, a UE U1 camps in the F1 frequency band of the base station A1, and a UE U2 camps in the F2 frequency band of the base station B2.

The base station A1 predicts the location of the UE at time t2: At time t1, the UE U1 is in a grid a1, and the UE U2 is in a grid b1. A query of the "user profile" is performed to obtain a movement direction and movement speed of the UE, which are combine with historical profile data of the UE to determine the grid location of the UE at time t2. FIG. 24 indicates that the UE U1 is predicted to be in grid a2 at time t2, and the UE U2 is predicted to be in grid b2 at time t2.

The base station A1 determines a set of candidate cells for UE camping: Based on the user profile, a service attribute of the UE can be obtained, and combined with a real-time service characteristic of the UE at time t1, a service demand of the UE at time t2 can be predicted. Based on the service demand of the UE at time t2 and the grid location of the UE, a network-level grid profile library is queried to find the location of the grid a2 and grid b2, identifying the set of candidate cells $\{Cell_1, Cell_2, ......, Cell_n\}$ which can meet the service demand of the UE U1/U2. The base station A1 sends the prediction information which the UE U1 will camp in each cell in the candidate set at time t2. When each cell in the candidate set receives the prediction information from the base station A1 about UE U1's camping at time t2, each cell needs to evaluate the prediction information in conjunction with its own configured energy-saving strategy. If $Cell_k(1 \leq k \leq n)$ determines that it will be in a non-service state due to energy-saving measures at time t2, $Cell_k(1 \leq k \leq n)$ will record this information.

Each base station determines its own energy consumption at time t2: After predicting the set of candidate cells for the UE camping at time t2, the base station energy consumption profile data of the predicted camping cell at time t2 is used, employing a segmented base station energy consumption inference method to predict the energy consumption set of each base station at time t2, which in this case is $\{P_{BS\_A1}, P_{BS\_A2}, P_{BS\_A3}, P_{BS\_B1}, P_{BS\_B2}\}$.

Determination of the camping scheme with the lowest energy consumption: Each base station in the target network area (in this case, the base stations A1-A3 and B1-B2) sends the predicted energy consumption information $\{P_{BS\_A1}, P_{BS\_A2}, P_{BS\_A3}, P_{BS\_B1}, P_{BS\_B2}\}$ at time t2, along with the information of the cell where the UE camps corresponding to the base station power consumption $P_{BS\_j}(j \in \{A1, A2, A3, B1, B2\})$, to the Decision Control Server (DCS). The DCS calculates the power consumption set $\{\sum_{j=1}^{K} P_{1j}, \sum_{j=1}^{K} P_{2j}, ......, \sum_{j=1}^{K} P_{mj}\}$ (the current network area has K base stations and m optional camping schemes) of the target network area at time t2 based on the collected predicted power consumption information of each base station at time t2 and the UE camping information corresponding to each base station's power consumption. The DCS selects the camping scheme with the lowest energy consumption from the power consumption set. Note that: If the $Cell_k(1 \leq k \leq n)$ reports to the DCS and indicates that it cannot meet the UE's camping requirement, the DCS will exclude a camping scheme containing the $Cell_k$ when selecting available camping options; when selecting an available camping scheme, the DCS will consider the energy-saving strategy of each cell in the target network to avoid selecting a cell which is already in or about to enter an energy-saving state at time t2, especially those which would lead to cell deactivation due to energy-saving functions such as carrier shutdown or deep sleep.

DCS issues a control instruction: Based on the selected camping scheme for time t2, the DCS sends a corresponding control instruction to each base station/cell in the area to ensure it executes according to the DCS-selected scheme, enabling each UE in the area to camp on the respective designated cell at time t2. This ensures the lowest energy consumption in the area while meeting the user service perception requirement.

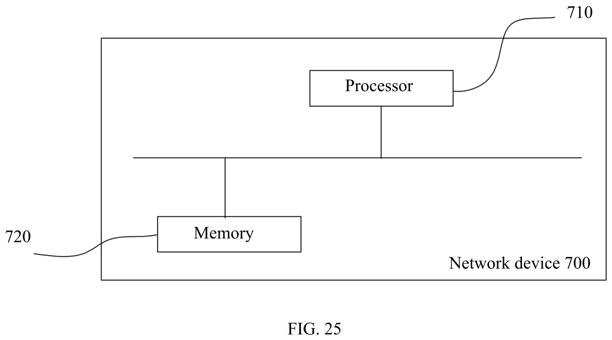

As shown in FIG. 25, an embodiment of the present disclosure also provides a network device 700, which includes:

A memory 720, a processor 710, and a computer program stored in the memory 720 and executable on the processor 710.

The processor 710 and memory 720 may be connected via a bus or other means.

It should be noted that the network device 700 in this embodiment shares the same concept as the network scheduling method in the above embodiments, thus having identical implementation principles and technical effects, which will not be elaborated here.

The non-transitory software program and computer-executable instructions required to implement the network scheduling method of the above embodiments are stored in the memory 720. When executed by the processor 710, the non-transitory software program and computer-executable instructions perform the network scheduling method described in the above embodiments, such as executing the method steps S100 to S300 in FIG. 2, steps S210 to S220 in FIG. 3, steps S110 to S150 in FIG. 4, steps S211 to S214 in FIG. 6, steps S2121 to S2122 in FIG. 8, steps S2123 to S2124 in FIG. 9, steps S2125 to S2126 in FIG. 12, steps S2131 to S2135 in FIG. 13, steps S221 to S225 in FIG. 15, steps S226 to S227 in FIG. 17, steps S2261 to S2267 in FIG. 18, steps S230 to S240 in FIG. 21, steps S2271 to S2272 in FIG. 22, and steps S310 to S320 in FIG. 23.

Furthermore, an embodiment of the present disclosure also provides a computer-readable storage medium storing computer-executable instructions. When executed by a processor, such as the processor 710 in the above network device 700 embodiment, these instructions enable the processor 710 to perform the network scheduling method described in the above embodiments, such as executing the method steps S100 to S300 in FIG. 2, steps S210 to S220 in FIG. 3, steps S110 to S150 in FIG. 4, steps S211 to S214 in FIG. 6, steps S2121 to S2122 in FIG. 8, steps S2123 to S2124 in FIG. 9, steps S2125 to S2126 in FIG. 12, steps S2131 to S2135 in FIG. 13, steps S221 to S225 in FIG. 15, steps S226 to S227 in FIG. 17, steps S2261 to S2267 in FIG. 18, steps S230 to S240 in FIG. 21, steps S2271 to S2272 in FIG. 22, and steps S310 to S320 in FIG. 23.

The embodiment of the present disclosure includes: obtaining current terminal device characteristic information of a UE in the target network and determining a predicted user service demand based on the current terminal device characteristic information and a preset user profile; then determining a base station energy consumption prediction set based on a preset base station energy consumption profile and the predicted user service demand; and finally performing energy-saving scheduling on a base station in the target network based on the base station energy consumption prediction set. According to the technical scheme provided by the embodiments of the present disclosure, user perception and base station energy consumption are coordinated to reduce base station energy consumption while ensuring user perception, thereby achieving the goal of energy saving and emission reduction.

Those having ordinary skills in the art may understand that all or some of the steps in the above disclosed methods and systems may be implemented as software, firmware, hardware, or appropriate combinations thereof. Certain physical components or all physical components may be implemented as software executed by a processor, such as a central processing unit, digital signal processor, or microprocessor, or as hardware, or as an integrated circuit, such as an application-specific integrated circuit. Such software may be distributed on computer-readable media, which may include computer storage media (or non-transitory media) and communication media (or transitory media). As is well known to those having ordinary skills in the art, the term computer storage media includes volatile and non-volatile, removable and non-removable media implemented in any method or technology for storing information, such as computer-readable instructions, data structures, program modules, or other data. computer storage media include, but are not limited to, RAM, ROM, EEPROM, flash memory or other memory technologies, CD-ROM, digital versatile discs (DVD) or other optical storage, magnetic cassettes, magnetic tapes, magnetic disk storage or other magnetic storage devices, or any other medium which can be used to store desired information and can be accessed by a computer. Furthermore, as is well known to those having ordinary skills in the art, communication media typically embody computer-readable instructions, data structures, program modules, or other data in a modulated data signal, such as a carrier wave or other transmission mechanism, and may include any information delivery medium.

The above describes some implementations of the present disclosure, but the present disclosure is not limited to the aforementioned implementations. Those having ordinary skills in the art may make various equivalent modifications or substitutions without departing from the principle of the present disclosure, and such equivalent modifications or substitutions are all included within the scope defined by the claims of the present disclosure.

**Claims**

**1.** A network scheduling method, comprising:

obtaining current terminal device characteristic information of a user equipment, UE, in a target network and deriving a predicted user service demand based on the current terminal device characteristic information and a preset user profile;
determining a base station energy consumption prediction set based on a preset base station energy consumption profile and the predicted user service demand; and
performing energy-saving scheduling on a base station in the target network based on the base station energy consumption prediction set.

2. The network scheduling method of claim 1, wherein determining the base station energy consumption prediction set based on the preset base station energy consumption profile and the predicted user service demand comprises:

obtaining a set of campable cells based on the predicted user service demand and a preset network-level grid profile; and

performing inference on the set of campable cells based on the base station energy consumption profile to obtain the base station energy consumption prediction set.

3. The network scheduling method of claim 1, wherein the user profile is obtained by:

obtaining user attribute information, user service attribute information, and user behavior information of the UE;

performing data cleaning and classification on the user attribute information, the user service attribute information, and the user behavior information to obtain a first training set and a first test set;

adjusting a model parameter of a preset first profile model based on the first training set;

performing validation on the adjusted first profile model based on the first test set; and

in response to successful validation, determining the first profile model as the user profile.

4. The network scheduling method of claim 2, wherein the network-level grid profile is obtained by:

obtaining wireless signal strength information between the base station and the UE;

determining a cell-level grid based on the wireless signal strength information;

obtaining a cell-level grid profile based on cell information corresponding to the cell-level grid and UE behavior data; and

constructing the network-level grid profile based on the cell-level grid and the cell-level grid profile.

5. The network scheduling method of claim 4, wherein determining the cell-level grid based on the wireless signal strength information comprises:

constructing an initial grid based on the wireless signal strength information; and

determining the cell-level grid based on a measurement signal in the initial grid.

6. The network scheduling method of claim 5, wherein constructing the initial grid based on the wireless signal strength information comprises:

in response to a number of cells where the UE is located being not less than three, determining the wireless signal strength information as a first signal strength of a serving cell and neighboring cells, and obtaining the initial grid by dividing the first signal strength of the serving cell and the neighboring cells according to a preset strength interval range; and

in response to a number of cells where the UE is located being less than three, determining the wireless signal strength information as a second signal strength of a serving cell, and obtaining the initial grid by dividing the second signal strength of the serving cell and a radial direction of the serving cell according to a preset strength interval range.

7. The network scheduling method of claim 5, wherein determining the cell-level grid based on the measurement signal in the initial grid comprises:

collecting the measurement signal in the initial grid within a preset time interval; and

in response to a number of times for which the measurement signal is not lower than a preset signal threshold reaching a set count, determining the corresponding initial grid as the cell-level grid.

8. The network scheduling method of claim 4, wherein obtaining the cell-level grid profile based on the cell information corresponding to the cell-level grid and the UE behavior data comprises:

obtaining the cell information corresponding to the cell-level grid and the UE behavior data;

organizing the cell information and the UE behavior data to obtain a second training set and a second test set;

adjusting a model parameter of a preset second profile model based on the second training set;

performing validation on the adjusted second profile model based on the second test set; and

in response to successful validation, determining the second profile model as the cell-level grid profile.

9. The network scheduling method of claim 1, wherein the base station energy consumption profile is obtained by:

   obtaining hardware characteristic data, configuration data, and operation data of the base station;
   organizing the hardware characteristic data, the configuration data, and the operation data to obtain a third training set and a third test set;
   adjusting a model parameter of a preset third profiling model based on the third training set;
   performing validation on the adjusted third profiling model based on the third test set; and
   in response to successful validation, determining the third profiling model as the base station energy consumption profile.

10. The network scheduling method of claim 2, wherein performing inference on the set of campable cells based on the base station energy consumption profile to obtain the base station energy consumption prediction set comprises:

   constructing segmented base station energy consumption models based on the base station energy consumption profile; and
   performing segmented prediction on the set of campable cells based on the segmented base station energy consumption models to obtain the base station energy consumption prediction set.

11. The network scheduling method of claim 10, wherein constructing the segmented base station energy consumption models based on the base station energy consumption profile comprises:

   obtaining hardware characteristic data, configuration data, and operation data of the base station;
   determining a parameter affecting energy consumption prediction from the hardware characteristic data, the configuration data, and the operation data;
   determining a plurality of power consumption inference models based on the parameter affecting energy consumption prediction and a preset segmentation range;
   obtaining a fourth training set and a fourth test set based on the base station energy consumption profile;
   adjusting model parameters of the power consumption inference models based on the fourth training set;
   performing validation on the adjusted power consumption inference models based on the fourth test set; and
   in response to successful validation, determining the power consumption inference models as the segmented base station energy consumption models.

12. The network scheduling method of claim 2, wherein obtaining the set of campable cells based on the predicted user service demand and the preset network-level grid profile comprises:

   determining a plurality of items of predicted camping cell information which satisfies the predicted user service demand based on the network-level grid profile; and
   adjusting the plurality of items of predicted camping cell information based on a cell energy-saving strategy in the target network to obtain the set of campable cells.

13. The network scheduling method of claim 10, wherein performing the segmented prediction on the set of campable cells based on the segmented base station energy consumption models to obtain the base station energy consumption prediction set comprises:

   selecting a corresponding power consumption inference model for each item of predicted camping cell information in the set of campable cells;
   performing prediction on the corresponding predicted camping cell information by adopting the power consumption inference model to obtain predicted power consumption information, wherein the predicted power consumption information corresponds one-to-one with the predicted camping cell information; and
   determining a plurality of items of the predicted power consumption information as the base station energy consumption prediction set.

14. The network scheduling method of claim 13, wherein performing the energy-saving scheduling on the base station in the target network based on the base station energy consumption prediction set comprises:

   selecting predicted power consumption information with the lowest power consumption from the base station energy consumption prediction set; and
   performing the scheduling on the base station and the UE in the target network based on the predicted camping cell information corresponding to the predicted power consumption information with the lowest power consumption.

15. A network device, comprising:

at least one processor;
at least one memory, configured to store at least one program; and
when the at least one program is executed by the at least one processor, the network scheduling method of any one of claims 1 to 14 is implemented.

16. A computer-readable storage medium, storing computer-executable instructions for executing the network scheduling method of any one of claims 1 to 14.

Base station (BS)

⇅

User equipment (UE)

FIG. 1

Obtain current terminal device characteristic information of a UE in a target network and derive a predicted user service demand based on the current terminal device characteristic information and a preset user profile — S100

Determine a base station energy consumption prediction set based on a preset base station energy consumption profile and the predicted user service demand — S200

Perform energy-saving scheduling on a base station in the target network based on the base station energy consumption prediction set — S300

FIG. 2

Obtain a set of campable cells based on the predicted user service demand and a preset network-level grid profile — S210

Perform inference on the set of campable cells based on the base station energy consumption profile to obtain the base station energy consumption prediction set — S220

FIG. 3

Obtain user attribute information, user service attribute information, and user behavior information of the UE — S110

Perform data cleaning and classification on the user attribute information, user service attribute information, and user behavior information to obtain a first training set and a first test set — S120

Adjust a model parameter of a preset first profile model based on the first training set — S130

Perform validation on the adjusted first profile model based on the first test set — S140

In response to successful validation, determine the first profile model as the user profile — S150

FIG. 4

User level

Subscription
information

User number

Subscribed service

Wireless technology

Serving cell
information

Wireless bandwidth

Service category

Service rate

Service type 1

Service duration

Service quality, including delay, jitter, etc.

User profile

User service
attribute

Service category

Service rate

Service type 2

Service duration

Service quality, including
delay, jitter, etc.

Geographic location

User location
information

Serving cell

Serving grid

Movement direction

User mobility
attribute

Movement speed

FIG. 5

Obtain wireless signal strength information between the base station and the UE — S211

Determine the cell-level grid based on the wireless signal strength information — S212

Obtain the cell-level grid profile based on cell information corresponding to the cell-level grid and the UE behavior data — S213

Construct the network-level grid profile based on the cell-level grid and the cell-level grid profile — S214

FIG. 6

EP 4 651 580 A1

FIG. 7

Construct an initial grid based on wireless signal strength information — S2121

Determine a cell-level grid based on a measurement signal in the initial grid — S2122

FIG. 8

In response to the number of cells where the UE is located being not less than three, determine the first signal strength of the serving cell and neighboring cells as the wireless signal strength information, and divide the first signal strength of the serving cell and neighboring cells according to a preset strength interval range to obtain an initial grid — S2123

In response to the number of cells where the UE is located being less than three, determine the second signal strength of the serving cell as the wireless signal strength information, and divide the second signal strength of the serving cell and the radial direction of the serving cell according to the preset strength interval range to obtain an initial grid — S2124

FIG. 9

Grid a2

Serving cell A

Neighboring cell A1

Grid a1

Grid a5

Grid a3

Neighboring cell A2

Grid a4

FIG. 10

Radial coverage

Wireless Grid

Serving cell A

Wireless Grid

Axial coverage

FIG. 11

Collect a measurement signal from the initial grid within a preset time interval — S2125

Determine the corresponding initial grid as a cell-level grid in response to the number of times that the measurement signal being not lower than the preset signal threshold reaching a set count — S2126

FIG. 12

Obtain cell information corresponding to the cell-level grid and UE behavior data — S2131

Organize the cell information and UE behavior data to obtain a second training set and a second test set — S2132

Adjust a model parameter of a preset second profiling model based on the second training set — S2133

Perform validation on the adjusted second profiling model based on the second test set — S2134

In response to successful validation, determine the second profiling model as the cell-level grid profile — S2135

FIG. 13

FIG. 14

Obtain hardware characteristic data, configuration data, and operation data of the base station — S221

Organize the hardware characteristic data, configuration data, and operation data to obtain a third training set and a third test set — S222

Adjust a model parameter of a preset third profiling model based on the third training set — S223

Perform validation on the adjusted third profiling model based on the third test set — S224

In response to successful validation, determine the third profiling model as the base station energy consumption profile — S225

FIG. 15

Hardware parameter
- Board type & quantity
- Chip temperature
- Board energy consumption

Board load indicator
- CPU utilization
- Memory utilization

Wireless configuration
- Activated RATs
- Number of activated carriers per RAT
- Number of cells operated per carrier

Baseband processing unit

Cell load
- Load of active UEs
- PRB load

Energy-saving function
- Activated function
- Activation duration per Energy-saving function

Energy consumption data

Base station energy consumption profile

Hardware parameter
- Device type
- Device temperature
- Device energy consumption
- Tx power

Wireless configuration
- Activated RATs
- Number of activated carriers per RAT
- Number of cells operated per carrier

Radio frequency unit

Parameter in operation
- Load of active UEs
- PRB load

Energy-saving function
- Activated function
- Activation duration per Energy-saving function

Energy consumption data

FIG. 16

Construct segmented base station energy consumption models based on the base station energy consumption profile — S226

Perform segmented prediction on the set of campable cells based on the segmented base station energy consumption models to obtain a base station energy consumption prediction set — S227

FIG. 17

Obtain hardware characteristic data, configuration data, and operation data of the base station — S2261

Determine a parameter affecting energy consumption prediction from the hardware characteristic data, configuration data, and operation data — S2262

Determine multiple power consumption inference models based on the parameter affecting energy consumption prediction and the preset segmentation — S2263

Obtain a fourth training set and a fourth test set based on the base station energy consumption profile — S2264

Adjust the model parameters of the multiple power consumption inference models based on the fourth training set — S2265

Perform validation on the adjusted multiple power consumption inference models based on the fourth test set — S2266

In response to successful validation, determine the multiple power consumption inference models as the segmented base station energy consumption models — S2267

FIG. 18

FIG. 19

EP 4 651 580 A1

FIG. 20

Determine multiple items of predicted camping cell information which satisfies the predicted user service demand based on the network-level grid profile — S230

Adjust and process the multiple items of predicted camping cell information according to the cell energy-saving strategy in the target network to obtain the set of campable cells — S240

FIG. 21

Select a corresponding power consumption inference model for each item of predicted camping cell information in the set of campable cells — S2271

Perform prediction on the corresponding predicted camping cell information based on the power consumption inference model to obtain predicted power consumption information, where the predicted power consumption information corresponds one-to-one with the predicted camping cell information — S2272

Determine multiple items of predicted power consumption information as the base station energy consumption prediction set — S2273

FIG. 22

Select the predicted power consumption information with the
lowest power consumption from the base station energy
consumption prediction set

S310

Perform scheduling on the base station and UE in the target
network based on the predicted camping cell information
corresponding to the lowest predicted power consumption
information

S320

FIG. 23

User profile library

Network-level grid profile library

Base station energy consumption profile library

DCS

Step 1:
Predict the user's service demand and grid location at time t2, based on the user profile library

Step 2:
Predict a set of campable cells meeting the user's service demand at time t2, based on the user profile library and network-level grid profile library

Step 3:
Infer the energy consumption of a base station included in each camping scheme, based on the base station energy consumption profile library

Step 4:
The cell reports camping prediction for time t2, and the base station reports corresponding energy consumption prediction for time t2.
Step 5:
The DCS issues a control command to execute the selected camping operation.

F2 frequency band layer

F1 frequency band layer

Location of UE U1 at time t1
Grid a1

Location of UE U1 at time t2
Grid a2

Location of UE U2 at time t1
Grid b1

Location of UE U2 at time t2
Grid b2

Radio access network

FIG. 24

710

Processor

Memory

720

Network device 700

FIG. 25

## INTERNATIONAL SEARCH REPORT

| International application No. |
|---|
| **PCT/CN2024/077442** |

**A. CLASSIFICATION OF SUBJECT MATTER**

H04W52/02(2009.01)i; H04W72/12(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, DWPI, VEN, CNKI: 基站, 用户, 小区, 终端, 调度, 功耗, 能耗, 画像, 属性, 模型, 特征, 需求, 业务, 确定, 选择, 预测, 栅格, 网格, 逻辑, 位置, 集和, 组合, 分段, 范围, 分区域, base station, cell, schedule, power, energy, consumption, attribute, feature, requirement, UE, determine, select, prediction, grid, location, segment, range, zone, set

**C. DOCUMENTS CONSIDERED TO BE RELEVANT**

| Category* | Citation of document, with indication, where appropriate, of the relevant passages | Relevant to claim No. |
|---|---|---|
| Y | CN 115278789 A (HUAWEI TECHNOLOGIES CO., LTD.) 01 November 2022 (2022-11-01) description, paragraphs 63-102 | 1-3, 9, 12, 15, 16 |
| Y | CN 109803285 A (RESEARCH INSTITUTE OF CHINA MOBILE COMMUNICATIONS CORP. et al.) 24 May 2019 (2019-05-24) description, paragraphs [0002]-[0061] | 1-3, 9, 12, 15, 16 |
| A | CN 113055990 A (DONGLIAN INFORMATION TECHNOLOGY CO., LTD.) 29 June 2021 (2021-06-29) entire document | 1-16 |
| A | CN 114727350 A (CHINA UNITED NETWORK COMMUNICATIONS GROUP CO., LTD.) 08 July 2022 (2022-07-08) entire document | 1-16 |
| A | WO 2022257670 A1 (ZTE CORP.) 15 December 2022 (2022-12-15) entire document | 1-16 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 April 2024** | **06 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/077442**

| Patent document cited in search report | | | Publication date (day/month/year) | Patent family member(s) | | | Publication date (day/month/year) |
|---|---|---|---|---|---|---|---|
| CN | 115278789 | A | 01 November 2022 | WO | 2022228267 | A1 | 03 November 2022 |
| | | | | EP | 4322610 | A1 | 14 February 2024 |
| | | | | US | 2024064631 | A1 | 22 February 2024 |
| CN | 109803285 | A | 24 May 2019 | None | | | |
| CN | 113055990 | A | 29 June 2021 | None | | | |
| CN | 114727350 | A | 08 July 2022 | None | | | |
| WO | 2022257670 | A1 | 15 December 2022 | CN | 115515208 | A | 23 December 2022 |

Form PCT/ISA/210 (patent family annex) (July 2022)

**EP 4 651 580 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310802957